(19) **Europäisches Patentamt European Patent Office Office européen des brevets**

(11) **EP 4 671 392 A1**

(12) **EUROPEAN PATENT APPLICATION**
published in accordance with Art. 153(4) EPC

(43) Date of publication:
**31.12.2025  Bulletin 2026/01**

(21) Application number: **24778679.1**

(22) Date of filing: **05.02.2024**

(51) International Patent Classification (IPC):
***C22B 1/14*** (2006.01)    ***C22B 1/16*** (2006.01)

(52) Cooperative Patent Classification (CPC):
**C22B 1/14; C22B 1/16**

(86) International application number:
**PCT/JP2024/003639**

(87) International publication number:
**WO 2024/202534 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023  JP 2023049704**

(71) Applicant: **JFE STEEL CORPORATION Tokyo 100-0011 (JP)**

(72) Inventors:
• **NAKAMURA Naoto Tokyo 100-0011 (JP)**

• **TAKEHARA Kenta Tokyo 100-0011 (JP)**
• **HORITA Kenya Tokyo 100-0011 (JP)**
• **FUJIWARA Shohei Tokyo 100-0011 (JP)**
• **IWAMI Yuji Tokyo 100-0011 (JP)**
• **HIGUCHI Takahide Tokyo 100-0011 (JP)**

(74) Representative: **Grünecker Patent- und Rechtsanwälte PartG mbB Leopoldstraße 4 80802 München (DE)**

(54) **PELLET PRODUCTION METHOD**

(57)    Provided is a pellet production method capable of more effectively suppressing bursting in pellets that are produced by a granulating step of performing granulation by adding water to a raw material, and a sintering step of sintering the granulated product. This pellet production method includes a granulating step in which granulation is performed by adding water to a raw material prepared by blending a powdery substance that contains an iron ore whose iron content is 63% by mass or less and an auxiliary raw material; and a sintering step that includes a drying and preheating zone and a subsequent sintering zone whereby a granulated product obtained is sintered, wherein before the sintering step, a specific surface area and true density of the raw material and an amount of water added in the granulating step are measured, followed by using the measurement values obtained to estimate appropriate values of a drying temperature and a gas flow rate in the drying and preheating zone of the sintering step, thus allowing a treatment in the drying and preheating zone of the sintering step to be performed using the estimated appropriate values of the drying temperature and gas flow rate.

EP 4 671 392 A1

[Fig. 1]

Raw material: Powdery substance containing iron ore whose iron content is 63 mass% or less and auxiliary raw material

↓

Measurement: Specific surface area of raw material, True density of raw material

↓

Granulating step: Performing granulation by adding water to raw material

↓

Measurement: Amount of water added in granulating step

↓

Estimation: Estimating drying temperature and gas flow rate in sintering step based on measured specific surface area, true density, and amount of water added

↓

Sintering step: (drying and preheating zone) Sintering granulated product with estimated drying temperature and gas flow rate

↓

(Sintered) pellets

## Description

Technical Field

The present invention relates to a method for producing pellets that are used as a raw material charged into a shaft furnace or the like.

Background Art

Lump ores and pellets are used as raw materials charged when performing shaft furnace reduction which has become a main-stream direct reduction ironmaking process. Pellets are produced via various steps of crushing, mixing, granulating, and sintering ores. In the sintering step, it is known that as water in the iron ore pellets (so-called green pellets) that have not yet been sintered evaporates, a phenomenon called bursting where the green pellets explode and/or powder will occur, thus degrading the yield of the pellets.

Patent Literature 1 discloses a method for producing green pellets containing an iron ore, auxiliary raw material, and organic binder. According to this production method, bursting occurrence at the time of sintering green pellets can be suppressed by controlling the viscosity of water in which the organic binder has been dissolved with respect to a compounding ratio of the raw material iron ore that contains a large amount of crystal water.

Citation List

Patent Literature

Patent Literature 1: JP-A-2020-180371

Summary of Invention

Technical Problem

Nowadays, as a raw material ore (iron ore) for pellets, high-grade ores containing small amounts of crystal water are generally used. However, as the demand for high-grade ores increases in the days ahead, it is estimated that there would arise a difficulty in stably securing high-grade ores. Therefore, the use of low-grade ores whose total Fe content is below 63% by mass, which are brought from Australia, India and other countries, is under consideration. As the crystal water in iron ore pellets (green pellets) increases, bursting is likely to occur in sintered pellets as described above, thus resulting in a demand to improve pellet production methods that are intended to suppress bursting.

In this regard, in the case of the green pellet production method disclosed in Patent Literature 1, no consideration is given to an appropriate raw material particle size of the green pellets, an appropriate amount of water added thereto, and an appropriate drying condition(s) thereof. Thus, bursting suppression in sintered pellets is insufficient, which has led to a demand for developing a novel pellet production method capable of more effectively suppressing bursting.

The present invention was made in view of the abovementioned circumstances. It is an object of the present invention to provide a pellet production method capable of more effectively suppressing bursting in pellets that are produced by a granulating step of performing granulation by adding water to a raw material, and a sintering step of sintering the granulated product.

Solution of Problem

The pellet production method of the present invention includes:

a granulating step in which granulation is performed by adding water to a raw material prepared by blending a powdery substance that contains an iron ore whose iron content is 63% by mass or less and an auxiliary raw material; and a sintering step that includes a drying and preheating zone and a subsequent sintering zone whereby a granulated product obtained is sintered,

wherein before the sintering step, a specific surface area and true density of the raw material and an amount of water added in the granulating step are measured, followed by using the measurement values obtained to estimate appropriate values of a drying temperature and a gas flow rate in the drying and preheating zone of the sintering step, thus allowing a treatment in the drying and preheating zone of the sintering step to be performed using the estimated appropriate values of the drying temperature and gas flow rate.

Here, in the case of the pellet production method of the present invention that is configured in the aforementioned manner, it is considered that more preferable solutions can be brought when

(1) the appropriate values of the drying temperature and the gas flow rate in the drying and preheating zone of the sintering step are estimated in such a manner that using the measurement values of the specific surface area and true density of the raw material and the measurement value of the amount of water added in the granulating step, the drying temperature and the gas flow rate are determined so that a bursting index X calculated by the following formula (1) becomes not smaller than 0.100 and not larger than 3.000,

$$X = 0.825 \times S_m \times \rho \times 10^{-4} + 0.061 \times M + 0.245 \times T \times 10^{-2} + 0.072 \times V - 1.285 \cdot \cdot (1)$$

wherein $S_m$, $\rho$, M, T, and V are defined as follows,
$S_m$: Specific surface area of raw material (cm$^2$/g)
$\rho$: True density of raw material (g/cm$^3$)
M: Amount of water added in granulating step (mass%)
T: Drying temperature (°C)
V: Gas flow rate (m/s).

Advantageous Effects of Invention

According to the pellet production method of the present invention, bursting can be more effectively suppressed in pellets that are produced by a granulating step of performing granulation by adding water to a raw material, and a sintering step of sintering the granulated product.

Brief Description of Drawings

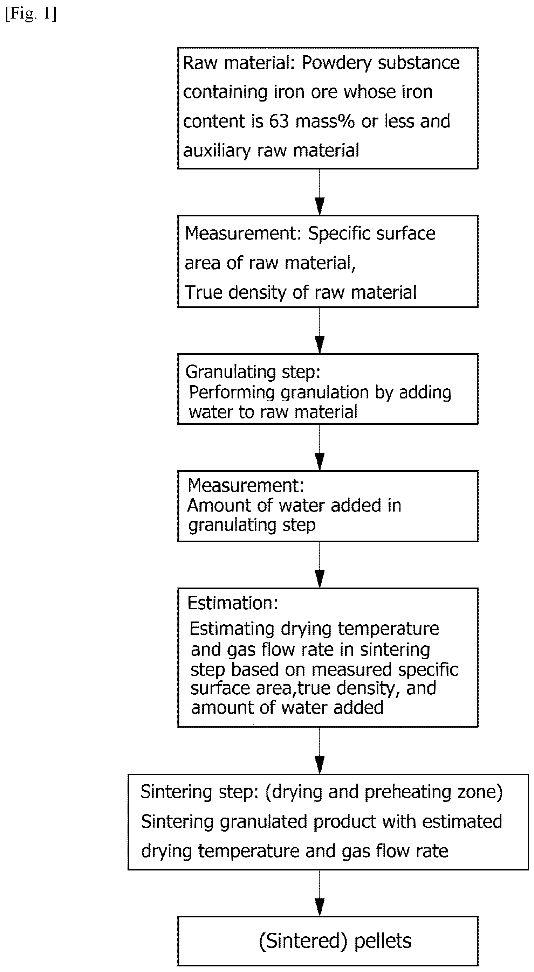

[FIG.1] is a flowchart explaining the steps in one embodiment of the pellet production method of the present invention.

Description of Embodiments

An embodiment of the present invention is described in detail hereunder. Here, the following embodiment is a set of examples of a device and/or method embodying the technical concept of the present invention and is not to limit the configuration of the present invention to those shown below. That is, various modifications can be made to the technical concept of the present invention within the technical scope described in the claims.
FIG.1 is a flowchart explaining the steps employed in one embodiment of the pellet production method of the present invention. An embodiment of the pellet production method of the present invention is described hereunder with reference to FIG.1. The pellet production method of this embodiment includes a granulating step and a sintering step. In the granulating step, granulation is performed by adding water to a raw material prepared by blending a powdery substance that contains an iron ore whose iron content is 63% by mass or less (so-called low-grade ore) and an auxiliary raw material(s), thereby obtaining a granulated product. The sintering step includes a drying and preheating zone and a subsequent sintering zone whereby the granulated product obtained is sintered to produce (sintered) pellets. Here, the reason that the present invention is only targeted at an iron ore whose iron content is 63% by mass or less (so-called low-grade ore) is because the impact of bursting is less significant if employing an iron ore whose iron content is greater than 63% by mass (so-called high-grade ore).
The characteristics of the pellet production method of this embodiment are as follows. At first, before the sintering step, the specific surface area and true density of the raw material are measured, along with the amount of water added during the granulating step. Thus, using these measurement values obtained, appropriate values of a drying temperature and a gas flow rate in the drying and preheating zone of the sintering step can be estimated. Then, the treatment in the drying and preheating zone of the sintering step can be performed using the estimated appropriate values of the drying temperature and gas flow rate. Particularly, in the description below, an iron ore whose iron content is 63% by mass or less is simply referred to as iron ore.
According to the pellet production method of this embodiment, bursting can be suppressed. Here, bursting is a phenomenon where, when iron ore pellets (green pellets) are heated, they will explode and/or powder as the water in the green pellets will evaporate.
Described in detail hereunder are specific surface area, true density, amount of water added, drying temperature, gas flow rate, and a bursting index X, in the pellet production method of this embodiment. Here, in the following description, for the sake of distinguishing pellets before and after performing sintering, iron ore pellets (pellets before sintering) may be referred to as green pellets, whereas pellets after sintering may be referred to as sintered pellets. The green pellets and sintered pellets may contain auxiliary raw materials other than iron ore (e.g., bentonite). Further, there are no particular limitations on the type and blending (ore blending) of an iron ore(s) serving as the raw material of the green pellets. The raw material of the green pellets may be that composed of one type of iron ore, or that prepared by mixing multiple types of ores at an arbitrary blending ratio.

<Specific surface area and true density>

Bursting occurs when an internal pressure is increased by the water evaporated from the green pellets. For this reason, it is considered that in the case of the green pellets acting as a powder packed bed, bursting is likely to occur if a permeation resistivity to vapor is high. Specific surface area, due to its measurement method, reflects a resistivity to a fluid permeating the powder packed bed, which makes it a crucial element impacting a bursting property.

Further, true density is substantially determined by the type(s) of an iron ore. Based on such specific surface area and true density, the average particle size of the packed bed can be estimated using the following formula (2). A small average particle size easily leads to a dense packed structure, which will impact bursting. Here, the specific surface area can be measured in accordance with JIS R 5021, and the true density can be measured in accordance with JIS M 8717.
[Formula 1]

$$d = \frac{6 \times 10^4}{S_m \times \rho} \quad \cdot \cdot \cdot (2)$$

wherein, d, $S_m$, and $\rho$ are defined as follows.
d: particle size ($\mu$m)
$S_m$: specific surface area (cm$^2$/g)
$\rho$: true density (g/cm$^3$)

<Amount of water added>

The amount of water added to the green pellets is a crucial element impacting the bursting property. As mentioned above, bursting occurs when the internal pressure is increased by the water evaporated from the green pellets, which indicates that the amount of water acting as a source of vapor generation impacts the bursting property. The amount of water added can be calculated by measuring changes in the weight of the green pellets when dried at 105°C.

<Drying temperature>

The sintering step can usually be divided into the drying and preheating zone and the sintering zone. When the green pellets sent to the sintering step are heated in the drying and preheating zone, bursting occurs as the water inside the pellets evaporates. Thus, drying temperature impacts the bursting property. While an excessively high drying temperature makes bursting more likely to occur due to an abrupt evaporation, an excessively low drying temperature will make it impossible for the green pellets to be dried sufficiently, which may incur a decrease in the strength and productivity of the sintered pellets. Therefore, the green pellets need to be dried at a proper temperature. Usually, the drying temperature in the drying and preheating zone is in a range of 100 to 500°C.

<Gas flow rate>

In the drying and preheating zone of the sintering step, a hot air is blown to the green pellets so as to heat them. As the gas flow rate of the hot air becomes faster, the temperature will rise easily due to an increase in the heat transfer coefficient, which will make bursting more likely to occur due to an abrupt evaporation. A slow gas flow rate makes it impossible for the green pellets to be dried sufficiently, which may incur a decrease in the strength and productivity of the sintered pellets. Therefore, the green pellets need to be dried at a proper gas flow rate. Usually, the gas flow rate in the drying and preheating zone is in a range of 0.1 to 3.0 m/s.

<Bursting index X>

In the present invention, the bursting index X is represented by the following formula (1), which is formulated by modeling, based on actual data acquired, the extent of the impacts brought by "specific surface area," "true density," "amount of water added," "drying temperature," and "gas flow rate" which are the elements impacting bursting,

$$X = 0.825 \times S_m \times \rho \times 10^{-4} + 0.061 \times M + 0.245 \times T \times 10^{-2} + 0.072 \times V - 1.285 \cdots (1)$$

wherein $S_m$, $\rho$, M, T, and V are defined as follows.
$S_m$: Specific surface area of raw material ($cm^2$/g)
$\rho$: True density of raw material (g/$cm^3$)
M: Amount of water added in granulating step (mass%)
T: Drying temperature (°C)
V: Gas flow rate (m/s)

The bursting index X represented by the formula (1) indicates the likelihood of bursting; it indicates that the larger this value is, the more likely bursting will occur. When the value of the bursting index X is 3.000 or smaller, sintered pellets can be obtained while suppressing bursting. It is preferred that the value of the bursting index X be 2.000 or smaller, more preferably 1.000 or smaller. However, an excessively small value of the bursting index X will lead to insufficient drying, which will cause the green pellets to be sintered in an insufficient manner in the sintering step and thus incur a decrease in strength. When the value of the bursting index X is 0.100 or larger, a post-sintering strength can be secured. While there are no particular limitations on the post-sintering strength, a post-sintering strength of 250 kg/pellet or higher, which is generally required in the technical field of the present invention, is preferred.

Next, the granulating step and sintering step of the pellet production method of the present invention are described in detail.

The granulating step is a step of obtaining iron ore pellets (green pellets) by granulating an ore powder. There is no limitation on a granulation method used in the granulating step. In the granulating step, for example, a pelletizer may be used to granulate an ore powder. As such pelletizer, a pan-type granulator (so-called pan pelletizer) may, for example, be used. In the sintering step, the green pellets, after going through the drying and preheating zone, are subjected to the sintering zone so as to be sintered and turned into sintered pellets. A sintering temperature in the sintering zone is, for example, 1,150 to 1,350°C.

Here, as explained above, bursting is a phenomenon where, when the green pellets are heated, they will explode and/or powder as the water in the green pellets will evaporate. The likelihood of bursting, i.e., bursting property, can, for example, be evaluated based on a ratio of pellets of a size of 5.6 mm or smaller that are generated after heat-treating the green pellets at a given temperature (e.g., 300°C), or after sintering the green pellets.

Specifically, when bursting occurs in the sintering step or at the time of heat-treating the green pellets at a given temperature (referred to as "in the sintering step or the like" hereinafter), the green pellets will explode or powder so that small pellet pieces (e.g., those of a size of 5.6 mm or smaller) will be generated. Thus, bursting is likely to occur (bursting property is high) if pellet pieces are generated in a large quantity in the sintering step or the like, which can then be evaluated as unfavorable in terms of bursting suppression. In contrast, bursting is unlikely to occur (bursting property is low) if pellet pieces are generated in a small quantity in the sintering step or the like, which can then be evaluated as favorable in terms of bursting suppression.

The quantity of the pellet pieces generated in the sintering step or the like is 3.0 % by mass or smaller, preferably 1.5% by mass or smaller, more preferably 1.0 % by mass or smaller, whereby degradation in the yield of the sintered pellets can be suppressed. Thus, if the quantity of the pellet pieces generated in the sintering step or the like is 3.0% by mass or smaller, the pellets can be evaluated as having a good quality with bursting being suppressed.

Examples

Green pellets were produced by the following procedures, and bursting property thereof was evaluated.

As an iron ore (raw material ore) serving as a raw material of the green pellets, there were used ores (Ore A, Ore B, Ore C) having the chemical compositions shown in the following Table 1. Here, "LOI" in Table 1 is indicated as a crystal water content (mass%), which is a change in weight after holding the ore at 1,000°C for 30 min. Further, in Table 1, "T.Fe" represents the total Fe content in the iron ore in terms of mass%. Here, "T.Fe" is a value quantified in accordance with a total iron content determination method for iron ores, which is specified in JIS M 8212:2022. As shown in Table 1, Ore A, Ore B, and Ore C as the raw materials of the green pellets are each a low-grade ore whose T.Fe is lower than 63% by mass.

[Table 1]

| Iron ore | Chemical composition (mass%) | | | | | | |
|---|---|---|---|---|---|---|---|
| | T.Fe | FeO | SiO$_2$ | CaO | Al$_2$O$_3$ | MgO | LOI |
| Ore A | 63.0 | 0.69 | 5.31 | 0.04 | 1.1 | 0.07 | 2.7 |
| Ore B | 56.4 | 0.34 | 5.34 | 0.16 | 3.12 | 0.20 | 11.6 |
| Ore C | 61.0 | 0.31 | 3.93 | 0.02 | 2.08 | 0.08 | 5.9 |

Shown in the following Table 2 are the information of the ores used in the green pellets (ore properties), and conditions or evaluation results in the granulating step and the sintering step. Below, after performing the later-described granulating step and sintering step starting from the ores having the raw material properties shown in Table 2, there were obtained sintered pellets of experiments No.1 to No.17.

In the beginning, the raw material ores shown in Table 2 were each crushed with a ball mill (in a batch-wise manner), thereby obtaining an ore powder. Then, the specific surface area and true density of the ore powder were measured. Further, Table 2 also shows particle sizes calculated from the specific surface areas and true densities.

Next, bentonite was added to the ore powder in an amount of 1.0% by mass to obtain a mixed powder. Here, although added as a binder for granulation, bentonite is not essential in this embodiment. The mixed powder was then granulated in a pan-type granulator (pelletizer) to obtain green pellets (granulating step). When granulating, the mixed powder was rotated while adding water thereto so that the granulation water content (water addition amount) would become various water addition amounts. Here, the granulation water content can be obtained by measuring a change in the weight of the green pellets before and after holding them at 105°C for 24 hours. For example, if a rate of change in the weight of the green pellets after holding them at 105°C for 24 hours is minus 10% by mass, it means that the water content in the granulating step is 10% by mass.

As for the particle size of the green pellets, a caliper was used to measure the major and minor axis diameters, and an average value thereof (arithmetic average) was used as the particle size. Particularly, for each group of green pellets obtained in each experiment No., the particle sizes of 10 pellets were measured, and an average value thereof (arithmetic average) was employed as the particle size of the green pellets prepared in that particular experiment No..

The bursting property was evaluated based on the quantity of the pellet pieces that were generated after the sintering step. Specifically, the bursting property was evaluated as follows. At first, 500 g of the green pellets were charged into a vertical furnace (having a cylindrical shape with a diameter of 60 mm). From below the layer of the green pellets toward the upper part thereof, air heated to various temperatures was passed therethrough at various flow rates for 10 min. Next, the green pellets that had been exposed to such air of various temperatures were heated to 1,300°C in an electric furnace other than the above furnace and were sintered at this temperature for 25 min (sintering step). Later, the green pellets were removed from the furnace and then sieved with a sieve having an opening of 5.6 mm. The bursting property was evaluated by measuring a passing ratio (mass%) of the pellet pieces that had passed through the sieve. In Table 2, the passing ratio of the pellet pieces is shown under "-5.6 mm ratio." Further, after evaluating the bursting property, the strength of the pellets in which bursting did not occur was measured. Strength measurement was carried out using Autograph with the displacement speed being set to 1.0 mm/min, and an average value obtained from 10 samples was used. In Table 2, the measurement result is shown under "sintered pellet strength."

[Table 2]

| No. | Ore type | Raw material property | | | Granulating step | | Sintering step | | | | | Remarks |
|---|---|---|---|---|---|---|---|---|---|---|---|---|
| | | Specific surface area ($cm^2$/g) | True density (g/$cm^3$) | Particle size ($\mu$m) | Green pellet particle size (mm) | Water content (mass%) | Drying temperature (°C) | Gas flow rate (m/s) | Formula (1) | -5.6 mm ratio (mass%) | Sintered pellet strength (kg/pellet) | |
| 1 | A | 1211 | 4.9 | 10.11 | 11.0 | 7.6 | 200 | 0.7 | 0.21 | 0.17 | 252 | Invention Example |
| 2 | A | 1598 | 4.9 | 7.66 | 12.4 | 8.1 | 300 | 1.0 | 0.66 | 0.39 | 297 | Invention Example |
| 3 | A | 1823 | 4.9 | 6.72 | 13.2 | 7.2 | 300 | 1.0 | 0.70 | 0.36 | 288 | Invention Example |
| 4 | B | 2400 | 3.8 | 6.58 | 12.6 | 11.5 | 300 | 1.0 | 0.98 | 0.44 | 303 | Invention Example |
| 5 | B | 4230 | 3.9 | 3.64 | 13.1 | 11.9 | 300 | 1.0 | 1.61 | 0.85 | 328 | Invention Example |
| 6 | C | 2505 | 4.4 | 5.44 | 11.3 | 11.0 | 300 | 1.0 | 1.10 | 0.68 | 316 | Invention Example |
| 7 | C | 3306 | 4.3 | 4.22 | 12.8 | 10.5 | 300 | 1.0 | 1.34 | 0.76 | 321 | Invention Example |
| 8 | C | 3306 | 4.3 | 4.22 | 13.2 | 12.5 | 300 | 1.0 | 1.46 | 0.71 | 312 | Invention Example |
| 9 | C | 3306 | 4.3 | 4.22 | 12.8 | 10.5 | 150 | 1.0 | 0.97 | 0.44 | 301 | Invention Example |
| 10 | C | 3306 | 4.3 | 4.22 | 12.8 | 10.5 | 500 | 1.0 | 1.83 | 0.92 | 328 | Invention Example |
| 11 | C | 3306 | 4.3 | 4.22 | 13.2 | 12.5 | 500 | 1.5 | 1.98 | 0.97 | 341 | Invention Example |
| 12 | C | 3306 | 4.3 | 4.22 | 13.2 | 12.5 | 500 | 2.0 | 2.02 | 1.52 | 344 | Invention Example |
| 13 | C | 6520 | 4.4 | 2.09 | 12.5 | 12.0 | 300 | 1.0 | 2.62 | 1.98 | 351 | Invention Example |
| 14 | C | 6520 | 4.4 | 2.09 | 12.5 | 12.0 | 400 | 1.5 | 2.90 | 1.96 | 354 | Invention Example |
| 15 | C | 1507 | 4.4 | 9.05 | 11.3 | 8.5 | 105 | 0.5 | **_0.07_** | 0.09 | 188 | Comparative Example |
| 16 | C | 6520 | 4.4 | 2.09 | 12.5 | 12.0 | 500 | 1.5 | **_3.15_** | 3.23 | 352 | Comparative Example |
| 17 | A | 5980 | 4.9 | 2.05 | 13.2 | 8.9 | 500 | 2.0 | **_3.04_** | 3.17 | 361 | Comparative Example |

The following facts were made clear from the results shown in Table 2. First of all, as for the sintered pellets of the experiments No.1 to No.14 where the values of the bursting index X expressed by the formula (1) were all 3.000 or smaller, the passing ratios (-5.6 mm ratios) of the pellet pieces, which served as the indexes of the bursting property, were all 3.0% by mass or less. Specifically, there were passing ratios of 1.5% by mass or less. That is, in these experiments No.1 to No.14 that are associated with this embodiment, sintered pellets were able to be obtained while suppressing bursting. In contrast, as for the experiments No.16 and No.17 where the values of the bursting index X expressed by the formula (1) were not 3.000 or smaller, the passing ratios (-5.6 mm ratios) of the pellet pieces were greater than 3.0% by mass. That is, in the experiments No.16 and No.17, bursting was not able to be suppressed. Meanwhile, in the case of the experiment No.15 where the value of the bursting index X expressed by the formula (1) was smaller than 0.100, the sintering strength was 250 kg/pellet or lower, thus failing to meet the strength required.

The following can be understood based on the results described above. As for the invention examples in which the pellets were treated in the drying and preheating zone of the sintering step with drying temperatures and gas flow rates that had been estimated so that the bursting index X expressed by the formula (1) would be 0.100 to 3.00, the passing ratios (-5.6 mm ratios) of the pellet pieces were all 3.0% by mass or less. Thus, it can be understood that the bursting property was favorable with regard to the sintered pellets. Further, in the invention examples, the sintered pellet strengths were greater than 250 kg/pellet, indicating that the strength required was met.

Industrial Applicability

The pellet production method of the present invention is industrially useful because it is capable of more effectively suppressing bursting in pellets that are produced by a granulating step of performing granulation by adding water to a raw material, and a sintering step of sintering the granulated product.

**Claims**

1. A pellet production method comprising:

   a granulating step in which granulation is performed by adding water to a raw material prepared by blending a powdery substance that contains an iron ore whose iron content is 63% by mass or less and an auxiliary raw material; and
   a sintering step that includes a drying and preheating zone and a subsequent sintering zone whereby a granulated product obtained is sintered,
   **characterized in that**

   before the sintering step, a specific surface area and true density of the raw material and an amount of water added in the granulating step are measured, followed by using the measurement values obtained to estimate appropriate values of a drying temperature and a gas flow rate in the drying and preheating zone of the sintering step, thus allowing a treatment in the drying and preheating zone of the sintering step to be performed using the estimated appropriate values of the drying temperature and gas flow rate.

2. The pellet production method, wherein
   the appropriate values of the drying temperature and the gas flow rate in the drying and preheating zone of the sintering step are estimated in such a manner that using the measurement values of the specific surface area and true density of the raw material and the measurement value of the amount of water added in the granulating step, the drying temperature and the gas flow rate are determined so that a bursting index X calculated by the following formula (1) becomes not smaller than 0.100 and not larger than 3.000,

$$X = 0.825 \times S_m \times \rho \times 10^{-4} + 0.061 \times M + 0.245 \times T \times 10^{-2} + 0.072 \times V - 1.285 \cdot \cdot (1)$$

   wherein $S_m$, $\rho$, M, T, and V are defined as follows,
   $S_m$: Specific surface area of raw material ($cm^2/g$)
   $\rho$: True density of raw material ($g/cm^3$)
   M: Amount of water added in granulating step (mass%)
   T: Drying temperature (°C)
   VV: Gas flow rate (m/s).

[Fig. 1]

```
┌─────────────────────────────────┐
│ Raw material: Powdery substance │
│ containing iron ore whose iron  │
│ content is 63 mass% or less and │
│ auxiliary raw material          │
└─────────────────────────────────┘
                 │
                 ▼
┌─────────────────────────────────┐
│ Measurement: Specific surface   │
│ area of raw material,           │
│ True density of raw material    │
└─────────────────────────────────┘
                 │
                 ▼
┌─────────────────────────────────┐
│ Granulating step:               │
│ Performing granulation by adding│
│ water to raw material           │
└─────────────────────────────────┘
                 │
                 ▼
┌─────────────────────────────────┐
│ Measurement:                    │
│ Amount of water added in        │
│ granulating step                │
└─────────────────────────────────┘
                 │
                 ▼
┌─────────────────────────────────┐
│ Estimation:                     │
│ Estimating drying temperature   │
│ and gas flow rate in sintering  │
│ step based on measured specific │
│ surface area,true density, and  │
│ amount of water added           │
└─────────────────────────────────┘
                 │
                 ▼
┌─────────────────────────────────────────┐
│ Sintering step: (drying and preheating  │
│ zone)                                    │
│ Sintering granulated product with       │
│ estimated drying temperature and gas    │
│ flow rate                                │
└─────────────────────────────────────────┘
                 │
                 ▼
┌─────────────────────────────────┐
│        (Sintered) pellets       │
└─────────────────────────────────┘
```

## INTERNATIONAL SEARCH REPORT

International application No.

**PCT/JP2024/003639**

### A. CLASSIFICATION OF SUBJECT MATTER

*C22B 1/14*(2006.01)i; *C22B 1/16*(2006.01)i
FI: C22B1/14; C22B1/16 P

According to International Patent Classification (IPC) or to both national classification and IPC

### B. FIELDS SEARCHED

Minimum documentation searched (classification system followed by classification symbols)

C22B1/14; C22B1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-063960 A (NIPPON STEEL CORPORATION) 29 February 2000 (2000-02-29) entire text | 1-2 |
| A | JP 2000-273553 A (NIPPON STEEL CORPORATION) 03 October 2000 (2000-10-03) entire text | 1-2 |
| A | JP 2016-176121 A (KABUSHIKI KAISHA KOBE SEIKO SHO) 06 October 2016 (2016-10-06) entire text | 1-2 |
| A | JP 09-279259 A (NIPPON STEEL CORPORATION) 28 October 1997 (1997-10-28) entire text | 1-2 |
| A | WO 2010/073718 A1 (NIPPON STEEL CORPORATION) 01 July 2010 (2010-07-01) entire text | 1-2 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/003639**

| Patent document cited in search report | | | Publication date (day/month/year) | Patent family member(s) | Publication date (day/month/year) |
|---|---|---|---|---|---|
| JP | 2000-063960 | A | 29 February 2000 | (Family: none) | |
| JP | 2000-273553 | A | 03 October 2000 | (Family: none) | |
| JP | 2016-176121 | A | 06 October 2016 | (Family: none) | |
| JP | 09-279259 | A | 28 October 1997 | (Family: none) | |
| WO | 2010/073718 | A1 | 01 July 2010 | CN  102264924  A entire text | |

Form PCT/ISA/210 (patent family annex) (July 2022)

**REFERENCES CITED IN THE DESCRIPTION**

**Patent documents cited in the description**

- JP 2020180371 A